# FASCICULE DE BREVET EUROPEEN

(11) **EP 3 371 865 B1**
(45) Date de publication et mention de la délivrance du brevet: **31.03.2021**
(21) Numéro de dépôt: 16775708.7
(22) Date de dépôt: 03.10.2016
(51) Int. Cl.: H02G 3/04, H01R 11/01, H02G 11/00

(54) **ORGANE DE RACCORDEMENT ELECTRIQUE SOUPLE ET ENSEMBLE D'EQUIPEMENTS ELECTRONIQUES INTERCONNECTES PAR UN TEL ORGANE**
FLEXIBLES ELEKTRISCHES KOPPLUNGSELEMENT UND SATZ AUS MITEINANDER ÜBER EIN DERARTIGES ELEMENT VERBUNDENEN ELEKTRONISCHEN VORRICHTUNGEN
FLEXIBLE ELECTRICAL COUPLING MEMBER AND SET OF ELECTRONIC DEVICES INTERCONNECTED BY SUCH A MEMBER

(30) Priorité: 06.11.2015 FR 1560670
(43) Date de publication de la demande: 12.09.2018
(73) Titulaire: Sagemcom Broadband SAS, 92500 Rueil-Malmaison (FR)
(72) Inventeur: KOHN, Stéphane, 92500 Rueil Malmaison (FR)
(74) Mandataire: Lavialle, Bruno François Stéphane
(86) Numéro de dépôt international: PCT/EP2016/073583
(87) Numéro de publication internationale: WO 2017/076559

(56) Documents cités:
- WO-A1-2005/102744
- WO-A1-2015/080028
- DE-U1-202014 101 359
- US-A1- 2005 091 797
- US-B1- 7 955 106

## Description

La présente invention concerne le raccordement électrique et, plus particulièrement, le raccordement électrique d'équipements électroniques entre eux.

### ETAT DE LA TECHNIQUE

Les foyers sont de nos jours équipés d'un grand nombre d'équipements électroniques destinés à la diffusion multimédia et aux télécommunications notamment. Ces équipements électroniques prennent souvent place dans le salon et comportent par exemple une passerelle Internet, un décodeur pour de télévision (télévision numérique terrestre ou satellite), un enregistreur sur disque dur... Ces équipements sont généralement regroupés en au moins deux boîtiers idéalement de mêmes dimensions et superposables pour être les plus discrets possible.

Pour pouvoir fonctionner, il est nécessaire de raccorder électriquement les équipements les uns aux autres. Il est utilisé à cette fin des câbles électriques qui sont raccordés à des ports de connexion externes généralement disposés à l'arrière des boîtiers pour être cachés à la vue des utilisateurs. Il est cependant fréquent qu'au moins une partie des câbles dépassent latéralement des boîtiers, ce qui altère l'esthétique de l'ensemble. En effet, il est impossible d'avoir des câbles de la longueur exacte nécessaire car un léger décalage des équipements électroniques provoquerait une tension sur les câbles et donc sur les ports de connexion Le document US7955106 décrit un dispositif selon le préambule de la revendication 1.

### OBJET DE L'INVENTION

Un but de l'invention est de remédier au moins en partie à cet inconvénient.

### BREF EXPOSE DE L'INVENTION

A cet effet, on prévoit, selon l'invention, un organe de raccordement électrique comprenant des conducteurs électriques s'étendant dans une gaine ayant des tronçons d'extrémité de section transversale de forme généralement parallélépipédique comprenant chacun au moins une face principale. Les conducteurs ont des extrémités reliées à deux connecteurs externes s'étendant chacun en saillie d'une des faces principales en étant orientés vers l'extérieur de la gaine d'un même côté de celle-ci. La gaine comporte au moins un tronçon intermédiaire souple recevant librement une surlongueur des conducteurs électriques.

Par surlongueur, on entend ici que les conducteurs électriques ont une longueur supérieure à l'espacement entre les connecteurs externes lorsque la gaine est dans un état de repos, c'est-à-dire lorsque la gaine n'est pas étirée ni rétractée. Ainsi, la souplesse de la gaine et la surlongueur des conducteurs électriques permettent à l'organe de raccordement de s'adapter à des décalages positionnels relatifs des équipements électroniques, de préférence sur trois directions et trois rotations, sans exercer de tension sur les connexions. En outre, par sa forme, l'organe de raccordement peut être plaqué contre les équipements électroniques.

L'invention a également pour objet un ensemble d'au moins deux équipements électroniques superposés et électriquement raccordés l'un à l'autre par au moins un organe de raccordement électrique selon l'invention. L'organe de raccordement électrique est plaqué contre les équipements électroniques.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique partielle en perspective d'un ensemble d'équipements électroniques selon l'invention ;
- la figure 2 est une vue schématique en perspective d'un organe de raccordement selon un premier mode de réalisation ;
- la figure 3 est une vue schématique en perspective de cet organe de raccordement, lors de son assemblage ;
- la figure 4 est une vue schématique en perspective d'un organe de raccordement selon un deuxième mode de réalisation ;
- la figure 5 est une vue schématique en perspective, avec écorché, d'un organe de raccordement selon un troisième mode de réalisation.

### DESCRIPTION DETAILLEE DE L'INVENTION

En référence aux figures, l'organe de raccordement électrique selon l'invention, généralement désigné en 1, comprend des conducteurs électriques 2 s'étendant dans une gaine 3 d'axe central X.

La gaine 3 a des tronçons d'extrémité, généralement désignés en 4, de part et d'autre d'un tronçon intermédiaire souple généralement désigné en 5. Chacun des tronçons d'extrémité 4 a une section transversale de forme généralement parallélépipédique et comprend des faces principales 4.1, 4.2 dont la longueur s'étend parallèlement à l'axe X. La face d'extrémité 4.1 est plus courte que la face d'extrémité 4.2 et se raccorde à celle-ci par un biseau 4.3 à l'opposé du tronçon intermédiaire 5.

En saillie de chaque face principale 4.2 est fixé un connecteur externe 6, ici un connecteur de type USB 3.0 standard pour l'un des tronçons d'extrémité 4 et un connecteur de type mini USB 3.0 pour l'autre des tronçons d'extrémité 4. Les connecteurs externes 6 sont orientés vers l'extérieur de la gaine 3 d'un même côté de celle-ci et ont une partie débouchant dans la gaine 3 pour être reliée à l'une des deux extrémités des conducteurs électriques 2.

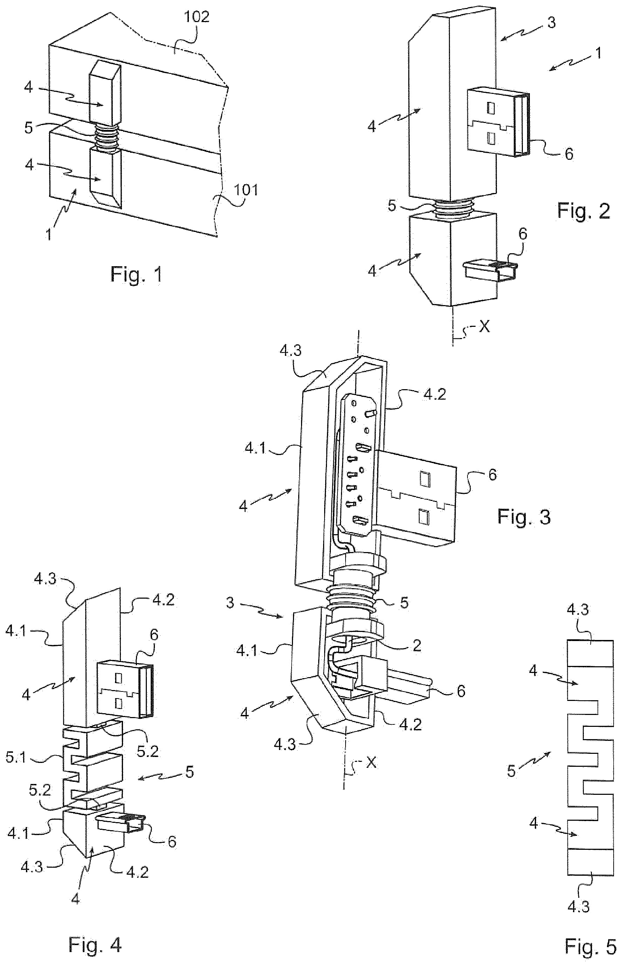

En référence plus particulièrement aux figures 1 à 3, et selon le premier mode de réalisation, chacun des deux tronçons d'extrémité 4 est ici formé de deux demi-coques refermées sur le connecteur externe 6 et sur une extrémité du tronçon intermédiaire 5.

Le tronçon intermédiaire souple 5 a une forme tubulaire en accordéon et a une section transversale circulaire relativement réduite par rapport aux tronçons d'extrémité 4. Le tronçon intermédiaire souple 5 a ses extrémités pourvues d'une collerette assurant la retenue des extrémités du tronçon intermédiaire souple 5 dans les tronçons d'extrémité 4.

Le tronçon intermédiaire souple 5 reçoit librement une surlongueur des conducteurs électriques 2. Plus précisément ici, les conducteurs électriques 2 s'étendent librement dans toute la gaine 3 jusqu'aux connecteurs externes 6. Les conducteurs électriques ont ainsi une longueur supérieure à l'espacement entre les connecteurs externes lorsque la gaine est dans un état de repos, c'est-à-dire lorsque la gaine n'est pas étirée.

Les tronçons d'extrémité 4 sont ici en matière plastique rigide et le tronçon intermédiaire 5 est en élastomère. En variante, les tronçons d'extrémité 4 peuvent aussi être en une matière plastique souple telle qu'un élastomère.

Sur la figure 1 est représenté un ensemble d'au moins deux équipements électroniques 101, 102 superposés et électriquement raccordés l'un à l'autre par un organe de raccordement électrique 1 tel que celui précédemment décrit. Les tronçons d'extrémité 4 de l'organe de raccordement électrique 1 ont leur face principale 4.2 qui est plaquée contre les équipements électroniques 101, 102.

En référence à la figure 4 et selon le deuxième mode de réalisation, le tronçon intermédiaire souple 5 comprend une portion centrale 5.1 ayant une forme ondulée le long d'une direction longitudinale (l'axe X) de la gaine 3. La portion centrale 5.1 est rattachée à chaque tronçon d'extrémité 4 par une portion de section transversale réduite 5.2. On comprend que la forme ondulée de la portion centrale apporte de la souplesse au tronçon intermédiaire souple 5 essentiellement en traction et compression le long de l'axe X et en flexion autour d'un axe perpendiculaire à l'axe X et parallèle aux faces principales 4.2 et que les portions de section transversale réduite 5.2 apporte de la souplesse au tronçon intermédiaire souple 5 essentiellement en flexion autour d'un axe perpendiculaire aux faces principales 4.2.

Les conducteurs électriques 2 s'étendent le long du tronçon intermédiaire souple 5 en suivant les ondulations.

Le tronçon intermédiaire souple 5 est globalement plat, c'est-à-dire que la plus faible dimension du tronçon intermédiaire souple 5 (son épaisseur) est mesurée perpendiculairement aux faces principales 4.1, 4.2.

En référence à la figure 5 et selon le troisième mode de réalisation, le tronçon intermédiaire souple 5 a une section transversale réduite et s'étend en zig-zag entre les tronçons d'extrémité 4. Le zig-zag est globalement plat, c'est-à-dire que la plus faible dimension du zig-zag (son épaisseur) est mesurée perpendiculairement aux faces principales 4.1, 4.2. Plus précisément, le tronçon intermédiaire souple 5 forme une succession de coudes carrés alternativement dans un sens puis dans l'autre. Les coudes peuvent en variante être triangulaires ou arrondis.

Les conducteurs électriques 2 s'étendent le long du tronçon intermédiaire souple 5 en suivant la forme en zig-zag.

Cette forme en zig-zag apporte de la souplesse au tronçon intermédiaire souple 5 essentiellement en traction et compression le long de l'axe X, en flexion autour d'un axe perpendiculaire à l'axe X et parallèle aux faces principales 4.2 et en flexion autour d'un axe perpendiculaire aux faces principales 4.2.

Bien entendu, l'invention n'est pas limitée aux modes de réalisation décrits mais englobe toute variante entrant dans le champ de l'invention telle que définie par les revendications.

En particulier, le tronçon intermédiaire souple peut être de forme différente avec par exemple un nombre différent de portions de section transversale réduite. Les ondulations peuvent être carrées, sinusoïdales ou d'une autre forme.

## Revendications

1. Organe de raccordement électrique comprenant des conducteurs électriques (2) s'étendant dans une gaine (3) ayant des tronçons d'extrémité (4) de section transversale de forme généralement parallélépipédique comprenant chacun au moins une face principale (4.2), les conducteurs ayant des extrémités reliées à deux connecteurs externes (6) s'étendant chacun en saillie d'une des faces principales en étant orientés vers l'extérieur de la gaine d'un même côté de celle-ci, la gaine comportant au moins un tronçon intermédiaire souple (5), **caractérisé en ce que** ledit tronçon reçoit librement une surlongueur des conducteurs électriques.

2. Organe de raccordement selon la revendication 1, dans lequel les conducteurs (2) sont disposés librement dans toute la gaine (3) jusqu'aux connecteurs (6) .

3. Organe de raccordement selon la revendication 1, dans lequel le tronçon intermédiaire souple (5) a une forme en accordéon.

4. Organe de raccordement selon la revendication 3, dans lequel le tronçon intermédiaire souple (5) a une section transversale circulaire.

5. Organe de raccordement selon la revendication 1, dans lequel le tronçon intermédiaire souple (5) a une forme ondulée le long d'une direction longitudinale de la gaine (3).

6. Organe de raccordement selon la revendication 1, dans lequel le tronçon intermédiaire souple (5) comprend au moins une portion de section transversale réduite.

7. Organe de raccordement selon la revendication 1, dans lequel au moins le tronçon intermédiaire souple (5) est en un élastomère.

8. Organe de raccordement selon la revendication 1, dans lequel le tronçon intermédiaire souple (5) a sa plus faible dimension mesurée perpendiculairement aux faces principales (4.1, 4.2).

9. Ensemble d'au moins deux équipements électroniques (101, 102) superposés et électriquement raccordés l'un à l'autre par au moins un organe de raccordement électrique (1) conforme à l'une quelconque des revendications précédentes et plaqué contre les équipements électroniques.

## Patentansprüche

1. Elektrisches Verbindungselement, umfassend elektrische Leiter (2), die sich in einer Hülle (3) erstrecken, die Endabschnitte (4) mit einem Querschnitt mit einer im Allgemeinen parallelepipedischen Form hat, wobei die Endabschnitte jeweils mindestens eine Hauptfläche (4.2) umfassen, wobei die Leiter Enden haben, die mit zwei äußeren Steckverbindern (6) verbunden sind, die jeweils von einer der Hauptflächen vorstehen und dabei von einer selben Seite der Hülle nach außen gerichtet sind, wobei die Hülle mindestens einen flexiblen Zwischenabschnitt (5) umfasst, **dadurch gekennzeichnet, dass** der genannte Abschnitt eine Überlänge der elektrischen Leiter frei aufnimmt.

2. Verbindungselement nach Anspruch 1, bei dem die Leiter (2) in der gesamten Hülle (3) bis zu den Steckverbindern (6) frei angeordnet sind.

3. Verbindungselement nach Anspruch 1, bei dem der flexible Zwischenabschnitt (5) die Form eines Faltenbalgs hat.

4. Verbindungselement nach Anspruch 3, bei dem der flexible Zwischenabschnitt (5) einen kreisförmigen Querschnitt hat.

5. Verbindungselement nach Anspruch 1, bei dem der flexible Zwischenabschnitt (5) entlang einer Längsrichtung der Hülle (3) eine gewellte Form hat.

6. Verbindungselement nach Anspruch 1, bei dem der flexible Zwischenabschnitt (5) mindestens einen Teil mit reduziertem Querschnitt hat.

7. Verbindungselement nach Anspruch 1, bei dem mindestens der flexible Zwischenabschnitt (5) aus einem Elastomer ist.

8. Verbindungselement nach Anspruch 1, bei dem die kleinste gemessene Abmessung des flexiblen Zwischenabschnitts (5) senkrecht zu den Hauptflächen (4.1, 4.2) verläuft.

9. Anordnung aus mindestens zwei elektronischen Ausrüstungen (101, 102), die übereinander angeordnet und über mindestens ein elektrisches Verbindungselement (1) nach einem der vorhergehenden Ansprüche elektrisch miteinander verbunden sind, das gegen die elektronischen Ausrüstungen gepresst ist.

## Claims

1. Electrical connection member comprising electrical conductors (2) extending in a sheath (3) having end segments (4) of generally rectangular cross-section, each having at least one main face (4.2), the conductors having ends connected to two external connectors (6), each projecting from one of the main faces, being oriented towards the outside of the sheath and on the same side thereof, the sheath comprising at least one flexible intermediate segment (5), characterize in that said segment freely receives extra lengths of the electrical conductors.

2. Connection member according to claim 1, wherein the conductors (2) are arranged freely all along the sheath (3) and as far as the connectors (6).

3. Connection member according to claim 1, wherein the flexible intermediate segment (5) is bellows shaped.

4. Connection member according to claim 3, wherein the flexible intermediate segment (5) has a cross-section that is circular.

5. Connection member according to claim 1, wherein the flexible intermediate segment (5) is of undulating shape along a longitudinal direction of the sheath (3).

6. Connection member according to claim 1, wherein the flexible intermediate segment (5) has at least one portion of reduced cross-section.

7. Connection member according to claim 1, wherein at least the flexible intermediate segment (5) is made of elastomer.

8. Connection member according to claim 1, wherein the flexible intermediate segment (5) has its smallest dimension measured perpendicularly to the main faces (4.1, 4.2).

9. Set of at least two pieces of electronic equipment (101, 102) placed one on another and electrically connected together by at least one electrical connection member (1) in accordance with any preceding claim and pressed against the pieces of electronic equipment.
